# EUROPÄISCHE PATENTANMELDUNG

(11) **EP 3 792 094 A1**
(43) Veröffentlichungstag der Anmeldung: **17.03.2021**
(21) Anmeldenummer: 20186797.5
(22) Anmeldetag: 20.07.2020
(51) Int. Cl.: B60L 15/20, B60L 15/38, B60W 30/02, B60W 50/023, B60W 50/029, B60L 3/00, B60T 8/17, B60T 8/1755, B60L 3/04, B60L 7/20, B60L 15/32, B60W 50/02, B60W 50/038, B60T 8/24

(54) **STABILISIERUNGSSYSTEM FÜR EIN FAHRZEUG**

(30) Priorität: 10.09.2019 DE 102019213705
(71) Anmelder: VOLKSWAGEN AG, 38440 Wolfsburg (DE)
(72) Erfinder: Witte, Bastian, 38179 Groß Schwülper (DE)

(57) **Zusammenfassung**

Die vorgestellte Erfindung betrifft ein Stabilisierungssystem (100) für ein Fahrzeug, wobei das Stabilisierungssystem (100) als Komponenten eine erste Antriebseinheit (101) und mindestens eine zweite Antriebseinheit (103), einen ersten Batteriestrang (111) und mindestens einen zweiten Batteriestrang (115), ein erstes Kontrollgerät (107) und mindestens ein zweites Kontrollgerät (109) umfasst. Die erste Antriebseinheit (101) umfasst eine Vielzahl Einzelmotoren (A1L, A2L, A3L, A4L, B1L, B2L, B3L, B4L) und die mindestens eine zweite Antriebseinheit umfasst eine Vielzahl Einzelmotoren (A1R, A2R, A3R, A4R, B1R, B2R, B3R, B4R). Eine erste Gruppe Einzelmotoren der ersten Antriebseinheit (101) und der mindestens einen zweiten Antriebseinheit (103) ist mit dem ersten Kontrollgerät (107) verbunden und durch den ersten Batteriestrang (111) mit elektrischer Energie zu versorgen. Eine zweite Gruppe Einzelmotoren der ersten Antriebseinheit (101) und der mindestens einen zweiten Antriebseinheit (103) ist mit dem zweiten Kontrollgerät (109) verbunden und durch den zweiten Batteriestrang (115) mit elektrischer Energie zu versorgen. Das erste Kontrollgerät (107) und/oder das mindestens eine zweite Kontrollgerät (109) sind dazu konfiguriert, für den Fall, dass mindestens eine Komponente des Stabilisierungssystem (100) fehlerhaft ist, jeweilige verbliebene, nicht fehlerhafte Komponenten des Stabilisierungssystems (100) derart zu kontrollieren, dass eine Raddrehzahldifferenz von Raddrehzahlen jeweiliger durch die jeweiligen Antriebseinheiten (101, 103) anzutreibenden Räder mittels der verbliebenen Komponenten minimiert wird.

## Beschreibung

Die vorgestellte Erfindung betrifft ein Stabilisierungssystem für ein Fahrzeug sowie ein Fahrzeug und ein Verfahren zum Stabilisieren eines Fahrzeugs.

Fahrzeuge entwickeln im Betrieb eine Bewegung um ihre Hochachse, die auch als "Gieren" bezeichnet wird. Bei einem Gespann aus Zugfahrzeug und Anhänger können Zugfahrzeug und Anhänger eigenständig und, dadurch bedingt, unterschiedlich gieren.

Eine Gierbewegung ist im Regelfall eine Bewegung mit Dämpfung, wobei die Dämpfung der Gierbewegung mit steigender Geschwindigkeit des Gespanns abnimmt.

Eine Geschwindigkeit, oberhalb derer eine Dämpfung einer Gierbewegung negativ wird, wird als "kritische Fahrgeschwindigkeit" bezeichnet. Bei einer Geschwindigkeit, die höher ist als die kritische Fahrgeschwindigkeit kann eine Gierbewegung durch ein Gespann nicht mehr selbst abgebaut werden, so dass sich die Gierbewegung, bedingt durch die negative Dämpfung, sukzessive steigert und das Gespann instabil wird.

Die kritische Fahrgeschwindigkeit von Wohnwagengespannen liegt in der Regel zwischen 100 km/h und 120 km/h. Aus diesem Grund werden Gespanne in Deutschland in der Regel auf eine Höchstgeschwindigkeit von 80 km/h beschränkt.

Es sind verschiedene Maßnahmen zum Reduzieren einer Gierbewegung eines Gespanns bekannt. Bspw. können Reibungselemente zwischen Kupplungskopf und Kupplungsschale eingebracht werden oder ein Zugfahrzeug durch ein Stabilisierungssystem einseitig gebremst werden.

Ferner ist es bekannt, einen Anhänger abzubremsen, um diesen zu stabilisieren.

Durch die Druckschrift DE 1971 56 01 B4 ist es bekannt, linke und rechte Räder eines Anhängers mittels einer Kupplung, wie bspw. einer Fliehkraftkupplung, miteinander zu verbinden, um eine Raddrehzahl der linken und rechten Räder anzugleichen.

Die Druckschrift US 6,959,237 B2 beschreibt ein ausfallsicheres Antriebssystem mit einer Vielzahl an Elektromotoren, die jeweils durch einen eigenen Treiber mit elektrischer Energie versorgt und durch eine spezifisch zugeordnete Kontrolleinheit gesteuert werden. Dabei können jeweilige Kontrolleinheiten im Fehlerfall eines Elektromotors die Treiber der verbliebenen Elektromotoren derart ansteuern, dass der Ausfall des Elektromotors kompensiert wird.

Die Druckschrift EP 098 90 49 B1 beschreibt ein Verfahren zum Stabilisieren eines Anhängers, bei dem in Abhängigkeit einer Gierbewegung eines Anhängers ein Zusatzwinkel auf eine Lenkbewegung aufsummiert wird.

Vor diesem Hintergrund ist es eine Aufgabe der vorgestellten Erfindung, eine Möglichkeit zum sicheren Betreiben eines Stabilisierungssystems für ein Fahrzeug bereitzustellen. Insbesondere ist es eine Aufgabe der vorgestellten Erfindung, ein ausfallsicheres Stabilisierungssystem für ein Gespann bereitzustellen, das einen Betrieb des Gespanns mit einer Geschwindigkeit größer als dessen kritische Geschwindigkeit ermöglicht.

Die voranstehend genannte Aufgabe wird gelöst durch ein Stabilisierungssystem, ein Fahrzeug und ein Verfahren zur Stabilisierung eines Fahrzeugs gemäß den jeweiligen unabhängigen Ansprüchen. In der Beschreibung, den Zeichnungen und den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Gemäß einem ersten Aspekt wird zur Lösung der voranstehend genannten Aufgabe ein Stabilisierungssystem für ein Fahrzeug vorgestellt. Das Stabilisierungssystem umfasst als Komponenten eine erste Antriebseinheit und mindestens eine zweite Antriebseinheit, einen ersten Batteriestrang und mindestens einen zweiten Batteriestrang, ein erstes Kontrollgerät und mindestens ein zweites Kontrollgerät. Die erste Antriebseinheit umfasst eine Vielzahl Einzelmotoren und die mindestens eine zweite Antriebseinheit umfasst eine Vielzahl Einzelmotoren. Eine erste Gruppe Einzelmotoren der ersten Antriebseinheit und der mindestens einen zweiten Antriebseinheit ist mit dem ersten Kontrollgerät verbunden und durch den ersten Batteriestrang mit elektrischer Energie zu versorgen. Eine zweite Gruppe Einzelmotoren der ersten Antriebseinheit und der mindestens einen zweiten Antriebseinheit ist mit dem zweiten Kontrollgerät verbunden und durch den zweiten Batteriestrang mit elektrischer Energie zu versorgen. Das erste Kontrollgerät und/oder das mindestens eine zweite Kontrollgerät sind dazu konfiguriert sind, für den Fall, dass mindestens eine Komponente des Stabilisierungssystem fehlerhaft ist, jeweilige verbliebene, nicht fehlerhafte Komponenten des Stabilisierungssystems derart zu kontrollieren, dass eine Raddrehzahldifferenz von Raddrehzahlen jeweiliger durch die jeweiligen Antriebseinheiten anzutreibenden Räder mittels der verbliebenen Komponenten minimiert wird.

Unter einer fehlerhaften Komponente ist im Kontext der vorgestellten Erfindung eine Komponente zu verstehen, die einen Fehler zeigt bzw. von einem Fehlerfall betroffen ist und entsprechend ihre vorgegebene Funktion nicht mehr oder nicht mehr vollständig bzw. zuverlässig ausführen kann.

Unter einem Energiemodul ist im Kontext der vorgestellten Erfindung ein Teil eines Energiespeichers, wie bspw. eine Batteriezelle zu verstehen. Mehrere Energiemodule können bspw. in einer Reihenschaltung zu einem Batteriestrang elektrisch gekoppelt werden, um eine Antriebseinheit bzw. jeweilige Einzelmotoren einer Antriebseinheit mit elektrischer Energie zu versorgen.

Unter einem Winkelbereich ist im Kontext der vorgestellten Erfindung ein Bereich einer Antriebsbahn einer Antriebseinheit zu verstehen. Die Antriebsbahn einer Antriebseinheit, also ein Bereich, innerhalb dessen die Antriebseinheit sich bewegt, teilt sich in eine Vielzahl Winkelbereiche auf, die jeweils einem Einzelmotor der Antriebseinheit zugeordnet sein können, so dass ein Einzelmotor zum Bereitstellen eines Antriebsmoments in einem Winkelbereich dient und alle Einzelmotoren gemeinsam ein Antriebsmoment über die Antriebsbahn der Antriebseinheit hinweg bereitstellen. Entsprechend kann vorgesehen sein, dass die jeweiligen Einzelmotoren einer jeweiligen Antriebseinheit einem vorgegebenen Winkelbereich einer Antriebsbahn der jeweiligen Antriebseinheit zugeordnet sind.

Unter einer Verbindung zwischen jeweiligen Einzelmotoren bzw. einem Einzelmotor und einem Energiespeicher ist im Kontext der vorgestellten Erfindung eine elektrische Verbindung, wie bspw. ein Kabel oder ein Bus, wie bspw. ein Kommunikationsbus zu verstehen.

Unter einem Fahrzeug ist im Kontext der vorgestellten Erfindung ein angetriebenes Gefährt, wie bspw. ein LKW, ein PKW, ein Bus oder ein angetriebener Anhänger zu verstehen. Ein Fahrzeug kann auch ein Gespann aus einem Zugfahrzeug und einem Anhänger oder ein nicht angetriebenes Gefährt, wie bspw. ein zu ziehender Anhänger sein.

Das vorgestellte Stabilisierungssystem dient insbesondere zum Fahren eines Gespanns mit hohen Geschwindigkeiten. Dazu ist vorgesehen, dass ein Fahrzeug des Gespanns, insbesondere ein Anhänger, mittels des vorgestellten Stabilisierungssystems gegen ein Aufschaukeln gesichert wird.

Zum Sichern eines Fahrzeugs gegen ein Aufschaukeln umfasst das vorgestellte Stabilisierungssystem eine Vielzahl elektrischer Antriebseinheiten, mittels derer auf jeweilige Räder des Fahrzeugs ein Antriebsmoment, wie bspw. ein positives Moment bzw. eine Beschleunigungskraft oder ein negatives Moment bzw. eine Bremskraft aufgeprägt werden kann. Durch ein radspezifisches Antriebsmoment kann eine Raddrehzahl der Räder des Fahrzeugs angeglichen werden, sodass sich eine Raddrehzahldifferenz minimiert. Dazu kann ein sich schneller drehendes Rad, d.h. ein Rad, das sich mit einer Geschwindigkeit dreht, die größer ist als eine Geschwindigkeit eines auf einer dem Rad gegenüberliegenden Seite angeordneten Rades, mittels eines negativen Antriebsmoments abgebremst werden. Zusätzlich oder alternativ kann ein sich langsamer drehendes Rad, d.h. ein Rad, dass sich mit einer Geschwindigkeit dreht, die geringer ist als eine Geschwindigkeit eines auf einer dem Rad gegenüberliegenden Seite angeordneten Rades, mittels eines positiven Antriebsmoments beschleunigt werden.

Um ein Antriebsmoment auf ein Rad aufzuprägen, kann eine Antriebseinheit mit dem Rad direkt oder indirekt, bspw. über eine Gelenkwelle, verbunden sein. Insbesondere kann eine Antriebseinheit als Nabenmotor in bzw. an einem Rad angeordnet sein.

Um eine Ausfallsicherheit des vorgestellten Stabilisierungssystems zu gewährleisten, ist vorgesehen, dass die Antriebseinheiten des Stabilisierungssystems jeweils eine Vielzahl von Einzelmotoren umfassen, die zusammenwirken, um ein Antriebsmoment bereitzustellen. Jeweilige Einzelmotoren einer Antriebseinheit wirken im Fehlerfall eines Einzelmotors der Antriebseinheit als Ausfallsicherheiten, so dass ein Ausfall eines Einzelmotors durch die verbleibenden Einzelmotoren zumindest teilweise kompensiert wird bzw. zu kompensieren ist.

Ferner sind die Einzelmotoren der Antriebseinheiten in mindestens zwei Gruppen, d.h. eine erste Gruppe und mindestens eine zweite Gruppe aufgeteilt. Die unterschiedlichen Gruppen von Einzelmotoren werden durch unterschiedliche Batteriestränge mit elektrischer Energie versorgt. Dies bedeutet, dass im Fehlerfall eines Batteriestrangs zumindest die Einzelmotoren, die von einem entsprechend verbliebenen Batteriestrang mit elektrischer Energie versorgt werden, zum Bereitstellen von Antriebsmoment zur Verfügung stehen.

Das vorgestellte Stabilisierungssystem kann eine Vielzahl elektrischer Verbindungen zum Übertragen von elektrischer Energie zum Betreiben der Einzelmotoren und/oder zum Übertragen von Kontrollsignalen zum Kontrollieren der Einzelmotoren umfassen. Die elektrischen Verbindungen können bspw. als Datenbussystem ausgestaltet sein, das insbesondere Einzelmotoren einer jeweiligen Gruppe von Einzelmotoren untereinander und mit einem der jeweiligen Gruppe zugeordneten Batteriestrang verbindet. Durch die Verwendung einer ersten Verbindung zum Versorgen von Einzelmotoren einer ersten Gruppe von Einzelmotoren mit elektrischer Energie und mindestens einer zweiten Verbindung zum Versorgen mindestens einer zweiten Gruppe von Einzelmotoren mit elektrischer Energie wirken die verschiedenen Verbindungen als Ausfallsicherheiten zum Bereitstellen von Antriebsmoment durch eine entsprechende Antriebseinheit, da im Fehlerfall einer jeweiligen Verbindung die entsprechend verbliebene Verbindung zum Versorgen zumindest einer Gruppe von Einzelmotoren mit elektrischer Energie verwendet werden kann.

Insbesondere kann vorgesehen sein, dass jeweilige Einzelmotoren einer Gruppe von Einzelmotoren zueinander parallel geschaltet bzw. in einer parallelen Schaltanordnung verbunden sind und durch einen der Gruppe von Einzelmotoren zugeordnetes Kontrollgerät kontrolliert, d.h. gesteuert bzw. geregelt, werden.

Durch die modulare Zuordnung der elektrischen Energieversorgung und die Aufteilung des Antriebsmoments auf eine Vielzahl Einzelmotoren, eine Vielzahl von Batteriesträngen und eine Vielzahl von Kontrollgeräten werden erfindungsgemäß Ausfallsicherheiten sowohl auf der Antriebseite als auch auf der Energieversorgungsseite erzeugt, durch die das vorgestellte Stabilisierungssystem besonders ausfallsicher ist.

Insbesondere genügt das vorgestellte Stabilisierungssystem den Anforderungen gemäß ASIL-B, so dass sich das vorgestellte Stabilisierungssystem zum Fahren eines Gespanns mit einer Geschwindigkeit eignet, die höher ist als eine kritische Geschwindigkeit des Gespanns. Da im Fehlerfall einer Komponente des Stabilisierungssystems Ausfallsicherheiten vorgesehen sind, kann es nicht zu einem instantanen Ausfall des Stabilisierungssystems kommen, wodurch ein Unfall, wie bspw. ein Überschlag eines Anhängers vermieden wird und eine Weiterfahrt ggf. mit einer Geschwindigkeit unterhalb der kritischen Geschwindigkeit ermöglicht wird.

Es kann vorgesehen sein, dass das erste Kontrollgerät und/oder das zweite Kontrollgerät dazu konfiguriert sind, für den Fall eines fehlerhaften Einzelmotors, eine Versorgung des fehlerhaften Einzelmotors mit elektrischer Energie zu stoppen oder eine von dem fehlerhaften Einzelmotor angeforderte Antriebsleistung auszusetzen und verbleibende fehlerfreie Einzelmotoren der jeweiligen Antriebseinheit derart zu kontrollieren, dass diese jeweils ein gegenüber einem Betrieb mit sämtlichen fehlerfrei arbeitenden Einzelmotoren höheres Antriebsmoment bereitstellen, um den fehlerhaften Einzelmotor zu kompensieren.

Um im Fehlerfall eines Einzelmotors ein Antriebsmoment zum Stabilisieren eines Fahrzeugs bereitstellen zu können, können das erste Kontrollgerät und/oder das zweite Kontrollgerät die verbliebenen Einzelmotoren derart ansteuern, dass diese den fehlerhaften Einzelmotor zumindest teilweise kompensieren. Dazu können das erste Kontrollgerät und/oder das zweite Kontrollgerät ein benötigtes Antriebsmoment gleichmäßig auf die verbliebenen Einzelmotoren verteilen, so dass diese jeweils mit einer geringen Mehrbelastung betrieben werden. Ferner können das erste Kontrollgerät und/oder das zweite Kontrollgerät eine Versorgung des fehlerhaften Einzelmotors unterbrechen oder ein von dem fehlerhaften Einzelmotor angefordertes Antriebsmoment "auf 0 setzen".

Es kann vorgesehen sein, dass das erste Kontrollgerät und das mindestens eine zweite Kontrollgerät wechselseitig als Redundanzen wirken, um im Fehlerfall eines jeweiligen Kontrollgeräts die Funktionen des fehlerhaften Kontrollgeräts auszuführen.

Weiterhin kann vorgesehen sein, dass das erste Kontrollgerät oder das zweite Kontrollgerät als Masterkontrollgerät konfiguriert ist, und einen Abgleich von bereitzustellendem Drehmoment durch die Einzelmotoren der ersten Antriebseinheit und der mindestens einen zweiten Antriebseinheit koordiniert, d.h. steuert bzw. regelt.

Alternativ kann ein zu dem ersten Kontrollgerät und dem zweiten Kontrollgerät zusätzliches Masterkontrollgerät vorgesehen sein, dass einen Abgleich von bereitzustellendem Drehmoment durch die Einzelmotoren der ersten Antriebseinheit und der zweiten Antriebseinheit koordiniert und das erste Kontrollgerät bzw. das zweite Kontrollgerät entsprechend steuert bzw. regelt. Es kann vorgesehen sein, dass das Stabilisierungssystem zwei Antriebseinheiten mit jeweils acht Einzelmotoren umfasst, und jeweilige Einzelmotoren einem Winkelbereich von 45° einer Antriebsbahn von 360° einer jeweiligen Antriebseinheit zugeordnet sind.

Bei Verwendung einer Antriebseinheit mit acht Einzelmotoren können jeweils vier Einzelmotoren einer Gruppe von Einzelmotoren zugeordnet werden, so dass bereits durch die Gruppierung eine hohe Ausfallsicherheit besteht und bei einem Ausfall eines Einzelmotors eine Minderung einer maximal bereitstellbaren Leistung um lediglich 12,5 % erfolgt und bei Ausfall einer Gruppe von Einzelmotoren, durch bspw. eine fehlerhafte Energieversorgung der Gruppe von Einzelmotoren, eine Minderung einer maximal bereitstellbaren Leistung um lediglich 50 % erfolgt.

Es kann weiterhin vorgesehen sein, dass die jeweiligen Antriebseinheiten der Vielzahl Antriebseinheiten ausgewählt sind aus der folgenden Liste an Antriebstypen: Radnabenmotor, Rad naher Motor und aufbaufester Motor mit Gelenkwelle.

Durch eine Antriebseinheit, die als Radnabenmotor ausgestaltet ist, kann das vorgestellte Stabilisierungssystem schnell und einfach an einem Fahrzeug nachgerüstet werden.

Durch eine Antriebseinheit, die als Rad naher Motor ausgestaltet ist, kann das vorgestellte Stabilisierungssystem unabhängig von einem jeweiligen Rad bzw. Reifentyp betrieben werden, sodass ein ggf. fehlerhaftes Rad schnell und einfach ausgetauscht werden kann, ohne die Funktionalität des Stabilisierungssystems zu beeinträchtigen.

Durch eine Antriebseinheit, die als aufbaufester Motor mit Gelenkwelle ausgestaltet ist, kann ein besonders bewegliches Fahrzeug bereitgestellt werden, das sich in sich verwinden kann.

Es kann weiterhin vorgesehen sein, dass das Stabilisierungssystem dazu konfiguriert ist, ein Fahrzeug anzutreiben und dabei durch die Minimierung der Differenz der Raddrehzahlen der jeweiligen durch die jeweiligen Antriebseinheiten anzutreibenden Räder das Fahrzeug zu stabilisieren oder ein von einem Zugfahrzeug zu ziehendes Fahrzeug durch die Minimierung der Differenz der Raddrehzahlen der jeweiligen durch die jeweiligen Antriebseinheiten anzutreibenden Räder zu stabilisieren.

Die Antriebseinheiten des vorgestellten Stabilisierungssystems können zum Bewegen eines Fahrzeugs bzw. zum Erzeugen von Vortrieb für ein Fahrzeug vorgesehen sein, wobei die Einzelmotoren der Antriebseinheiten entsprechend stark dimensioniert sein müssen. Alternativ können die Antriebseinheiten lediglich zum Bereitstellen eines Antriebsmoments zum Stabilisieren eines Fahrzeugs verwendet werden, wobei das Fahrzeug von einem unabhängigen Motor oder einem unabhängigen Zugfahrzeug bewegt wird, so dass die Einzelmotoren der Antriebseinheiten entsprechend kompakt ausgestaltet dimensioniert sein können.

Es kann weiterhin vorgesehen sein, dass das Stabilisierungssystem dazu konfiguriert ist, die Differenz der Raddrehzahlen der jeweiligen durch die jeweiligen Antriebseinheiten anzutreibenden Räder ausschließlich durch radselektives Bereitstellen von negativem Antriebsmoment zu minimieren.

Um eine besonders energiesparende und entsprechend kompakte Ausgestaltung des vorgestellten Stabilisierungssystems zu ermöglichen, kann lediglich eine Reduktion einer jeweiligen Raddrehzahl bewirkt werden, die bspw. unter Verwendung einer Rekuperationsbremse erreicht werden kann. Auf diese Weise kann ein Anhänger, der mit einem entsprechenden Stabilisierungssystem ausgestattet ist, einen Energiespeicher eines Zugfahrzeugs laden und zu dessen kraftstoffeffizienten und schadstoffeffizienten Betrieb beitragen.

Es kann weiterhin vorgesehen sein, dass die erste Gruppe Einzelmotoren 2n elektrische Einzelmotoren mit n ≥ 1 umfasst, und die zweite Gruppe Einzelmotoren 2n elektrische Einzelmotoren mit n ≥ 1 umfasst, und die erste elektrische Antriebseinheit mindestens zwei Einzelmotoren, bevorzugt 2n Einzelmotoren umfasst, und die mindestens eine zweite elektrische Antriebseinheit mindestens zwei Einzelmotoren, bevorzugt 2n Einzelmotoren umfasst.

Es kann weiterhin vorgesehen sein, dass das erste Kontrollgerät und das mindestens eine zweite Kontrollgerät als physisch getrennte Einheiten oder als Kontrollmodule eines übergeordneten Zentralkontrollgeräts ausgestaltet sind.

In einem zweiten Aspekt betrifft die vorgestellte Erfindung ein Fahrzeug mit einer möglichen Ausgestaltung des vorgestellten Stabilisierungssystems, wobei das Fahrzeug ein Kraftwagen oder ein Anhänger ist, und wobei das Fahrzeug mindestens eine Achse mit einem linken Rad und einem rechten Rad umfasst, und wobei eine Antriebseinheit des Stabilisierungssystems dem linken Rad und eine andere Antriebseinheit des Stabilisierungssystems dem rechten Rad zugeordnet ist.

Das vorgestellte Stabilisierungssystem dient insbesondere zum Stabilisieren des vorgestellten Fahrzeugs. Damit bringt das erfindungsgemäße Fahrzeug die gleichen Vorteile mit sich, wie sie ausführlich mit Bezug auf das erfindungsgemäße Stabilisierungssystem beschrieben worden sind.

Das vorgestellte Fahrzeug kann durch Verwendung des vorgestellten Stabilisierungssystems mit einer Geschwindigkeit betrieben werden, die größer ist als eine kritische Geschwindigkeit des Fahrzeugs, da die Antriebseinheiten des Fahrzeugs eine Radgeschwindigkeitsdifferenz zwischen den linken und rechten Rädern des Fahrzeugs minimieren und eine Gierbewegung des Fahrzeugs dadurch ebenfalls minimieren bzw. ein "Aufschaukeln" verhindern.

In einem dritten Aspekt betrifft die vorgestellte Erfindung ein Verfahren zur Stabilisierung einer möglichen Ausgestaltung des vorgestellten Fahrzeugs. Das Verfahren weist folgende Schritte auf:
- Ermitteln einer Raddrehzahldifferenz zwischen dem linken Rad und dem rechten Rad des Fahrzeugs, durch mindestens ein Kontrollgerät, insbesondere durch ein erstes Kontrollgerät und ein zweites Kontrollgerät,
- Bereitstellen eines radindividuellen Antriebsmoments durch die dem linken Rad zugeordnete Antriebseinheit und/oder durch die dem rechten Rad zugeordnete Antriebseinheit derart, dass die Raddrehzahldifferenz minimiert wird,
- Ansteuern jeweilig verbliebener Elektromotoren einer jeweiligen Antriebseinheit derart, dass ein zum Minimieren der Raddrehzahldifferenz benötigtes Antriebsmoment bereitgestellt wird, für den Fall, dass ein Elektromotor der jeweiligen Antriebseinheit fehlerhaft ist, durch das Kontrollgerät.

Das vorgestellte Verfahren dient insbesondere zum Stabilisieren des vorgestellten Fahrzeugs. Damit bringt das erfindungsgemäße Verfahren die gleichen Vorteile mit sich, wie sie ausführlich mit Bezug auf das erfindungsgemäße Stabilisierungssystem und das erfindungsgemäße Fahrzeug beschrieben worden sind.

Es kann vorgesehen sein, dass die jeweilig verbliebenen Elektromotoren derart angesteuert werden, dass diese ein positives Antriebsmoment an einem langsamer drehenden Rad des Fahrzeugs oder ein negatives Antriebsmoment an einem schneller drehenden Rad des Fahrzeugs bereitstellen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine mögliche Ausgestaltung des erfindungsgemäßen Stabilisierungssystems,
- Fig. 2: eine mögliche Ausgestaltung des erfindungsgemäßen Fahrzeugs,
- Fig. 3: eine mögliche Ausgestaltung des erfindungsgemäßen Verfahrens.

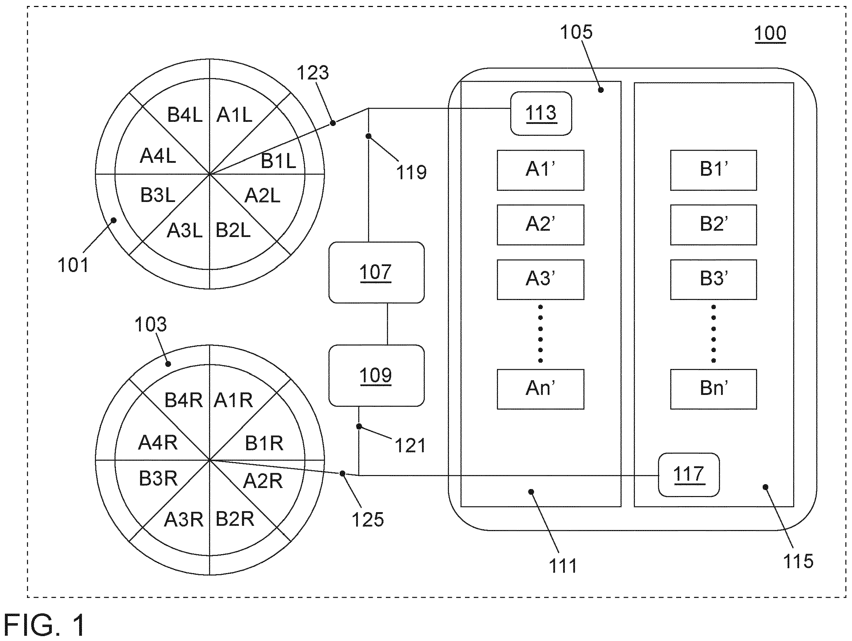

In Fig. 1 ist eine mögliche Ausgestaltung des vorgestellten Stabilisierungssystems 100 dargestellt. Das Stabilisierungssystem 100 umfasst eine erste Antriebseinheit 101, eine zweite Antriebseinheit 103, einen Energiespeicher 105, ein Kontrollgerät 107 und eine Vielzahl hier nicht dargestellter Verbindungen zwischen dem Energiespeicher 103, dem Kontrollgerät 105 und der ersten Antriebseinheit 101 bzw. der zweiten Antriebseinheit 103.

Die erste Antriebseinheit 101 umfasst Einzelmotoren A1L, A2L, A3L, A4L und B1L, B2L, B3L, B4L. Entsprechend sind die Einzelmotoren A1L, A2L, A3L, A4L und B1L, B2L, B3L, B4L in zwei Gruppen unterteilt, wobei eine erste Gruppe die Einzelmotoren A1L, A2L, A3L und A4L umfasst und eine zweite Gruppe die Einzelmotoren B1L, B2L, B3L und B4L umfasst. Entsprechend wirken die Einzelmotoren A1L, A2L, A3L, A4L und B1L, B2L, B3L, B4L jeweils wechselseitig als Ausfallsicherheiten.

Die Einzelmotoren A1L, A2L, A3L, A4L und B1L, B2L, B3L, B4L sind hier abwechselnd, also in der Reihenfolge A1L, B1L, A2L, B2L A3L, B3L, A4L, B4L angeordnet, wodurch eine Wahrscheinlichkeit eines Ausfalls mehrerer hintereinander angeordneter Einzelmotoren minimiert wird.

Bspw. können die Einzelmotoren A1L, A2L, A3L, A4L und B1L, B2L, B3L, B4L ein Einzelmotormoment von 100 Nm bereitstellen und einen mechanischen Winkelbereich von 360°/8 = 45° abdecken.

Die zweite Antriebseinheit 103 ist analog zu der ersten Antriebseinheit 101 konfiguriert und umfasst die Einzelmotoren A1R, A2R, A3R, A4R und B1R, B2R, B3R, B4R. Entsprechend können die ersten Antriebseinheit 101 und die zweite Antriebseinheit 103, wenn alle Einzelmotoren fehlerfrei arbeiten, jeweils ein Gesamtdrehmoment von 800 Nm bereitstellen.

Das Gesamtdrehmoment der ersten Antriebseinheit 101 wird erfindungsgemäß dazu verwendet, mindestens ein Rad eines Fahrzeugs abzubremsen oder zu beschleunigen, um eine Raddrehzahldifferenz zu einem dem Rad gegenüberliegend angeordneten Rad zu minimieren.

Das Gesamtdrehmoment der zweiten Antriebseinheit 103 wird erfindungsgemäß dazu verwendet, mindestens ein Rad eines Fahrzeugs abzubremsen oder zu beschleunigen, um eine Raddrehzahldifferenz zu einem dem Rad gegenüberliegend angeordneten Rad zu minimieren. Die Einzelmotoren A1L, A2L, A3L, A4L und A1R, A2R, A3R, A4R der Antriebseinheiten 101 und 103 werden, als erste Gruppe, durch ein erstes Kontrollgerät 107 kontrolliert. Die Einzelmotoren B1L, B2L, B3L, B4L und B1R, B2R, B3R, B4R der Antriebseinheiten 101 und 103 werden, als zweite Gruppe, durch ein zweites Kontrollgerät 109 kontrolliert, sodass die erste Antriebseinheit 101 und die zweite Antriebseinheit 103 aufeinander abgestimmt jeweilige Antriebsmomente, positiv oder negativ, bereitstellen. Dazu können das erste Kontrollgerät 107 und/oder das zweite Kontrollgerät 109 eine aktuelle Raddrehzahl der durch die erste Antriebseinheit 101 und die zweite Antriebseinheit 103 beeinflussten Räder, bspw. unter Verwendung einer Ableitung eines Winkelsignals zur Kommutierung, die sich proportional zur Raddrehzahl verhält, ermitteln..

Bspw. kann das erste Kontrollgerät 107 ein erstes Kontrollsignal erzeugen, das die erste Antriebseinheit 101 dazu konfiguriert, ein erstes Rad, dessen Raddrehzahl größer ist als eine Raddrehzahl eines gegenüberliegenden zweiten Rades, abzubremsen, indem das erste Rad durch die erste Antriebseinheit 101 mit einem negativen Antriebsmoment, also einem entgegen einer Rollrichtung des ersten Rades gerichteten Antriebsmoment beaufschlagt wird. Alternativ oder zusätzlich kann das zweite Kontrollgerät 109 ein zweites Kontrollsignal erzeugen, das die zweite Antriebseinheit 103 dazu konfiguriert, das zweite Rad, dessen Raddrehzahl kleiner ist als die Raddrehzahl des gegenüberliegenden ersten Rades, zu beschleunigen, indem das zweite Rad durch die zweite Antriebseinheit 103 mit einem positiven Antriebsmoment, also einem in Rollrichtung des zweiten Rades gerichteten Antriebsmoment beaufschlagt wird.

Der Energiespeicher 105, der hier bspw. als Hochvoltbatterie ausgestaltet ist, umfasst eine Vielzahl zu einem ersten Batteriestrang 111 in Reihe geschalteter Batteriezellen A1', A2', A3' bis An' mit einer Batteriekontrolleinheit 113 A' und davon getrennt eine Vielzahl zu einem zweiten Batteriestrang 115 in Reihe geschalteter Batteriezellen B1', B2', B3' bis Bn' mit einer Batteriekontrolleinheit 117.

Das erste Kontrollgerät 107 ist mit den Einzelmotoren der ersten Gruppe und der ersten Batteriekontrolleinheit 113 über einen ersten Datenbus 119 verbunden. Davon getrennt ist des zweite Kontrollgerät109 mit den Einzelmotoren der zweiten Gruppe und der zweiten Batteriekontrolleinheit 117 über einen zweiten Datenbus 121verbunden.

Die Einzelmotoren A1L, A2L, A3L, A4L und A1R, A2R, A3R, A4R der ersten Gruppesind mit dem ersten Batteriestrang 111 und die Einzelmotoren B1L, B2L, B3L, B4L und B1R, B2R, B3R, B4R der zweiten Gruppe sind mit dem zweiten Batteriestrang 115 zur Versorgung mit elektrischer Energie verbunden.

Damit ergibt sich ein erstes Subsystem, bestehend aus dem ersten Batteriestrang 111 mit Batteriezellen A1', A2', A3' bis An', der dazu gehörigen Batteriekontrolleinheit 113, den Einzelmotoren A1L, A2L, A3L, A4L und A1R, A2R, A3R, A4R der ersten Gruppe und dem dazu gehörigen ersten Kontrollgerät 107 sowie dazu gehörigen ersten Verbindungsleitungen 123 und dem ersten Datenbus 119.

Ebenso ergibt sich ein zweites Subsystem, bestehend aus dem zweiten Batteriestrang 115 mit Batteriezellen B1', B2', B3' bis Bn', der dazu gehörigen Batteriekontrolleinheit 117, den Einzelmotoren B1L, B2L, B3L, B4L und B1R, B2R, B3R, B4R der zweiten Gruppe und dem dazu gehörigen zweiten Kontrollgerät 109 sowie dazu gehörigen zweiten Verbindungsleitungen 125 und dem zweiten Datenbus 121.

Durch das erste Subsystem und das zweite Subsystem wird ein ausfallsicherer Aufbau erreicht, sodass auch bei einer beliebigen fehlerhaften Komponente in dem ersten Subsystem beide Antriebseinheiten 101 und 103 mindestens durch das zweite Subsystem weiterhin betriebsfähig sind, wenn auch ggf. mit erhöhter Belastung.

Bei einem Ausfall bzw. einem Fehlerfall einer Komponente können das erste Kontrollgerät 107 und/oder das zweite Kontrollgerät 109oder ein optionales Zentralsteuergerät, mittels jeweiliger verbleibender Komponenten ein Fahrzeug stabilisieren. Dazu kann bspw. vorgesehen sein, dass eine Höchstgeschwindigkeit des Fahrzeugs auf eine Geschwindigkeit begrenzt wird, die unter Verwendung der verbleibenden Komponenten sicher stabilisiert werden kann.

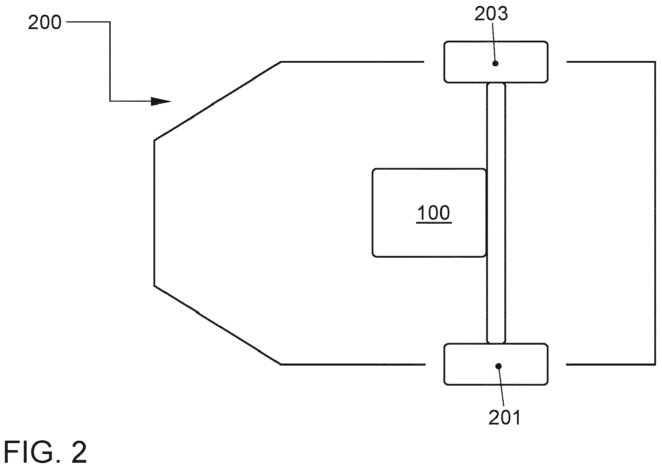

In Fig. 2 ist eine mögliche Ausgestaltung des vorgestellten Fahrzeugs 200 in Form eines Anhängers dargestellt. Das Fahrzeug 200 umfasst ein erstes Rad 201 und ein zweites Rad 203 sowie das Stabilisierungssystem 100, wie es mit Bezug auf Fig. 1 beschrieben ist.

Das Stabilisierungssystem 100 kontrolliert das erste Rad 201 und das zweite Rad 203 derart, dass eine Raddrehzahldifferenz zwischen dem ersten Rad 201 und dem zweiten Rad 203 minimal wird.

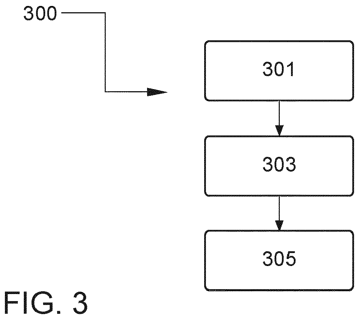

In Fig. 3 ist ein Ablauf einer möglichen Ausgestaltung des vorgestellten Verfahrens 300 dargestellt.

In einem Ermittlungsschritt 301 wird eine Raddrehzahldifferenz zwischen einem linken Rad und einem rechten Rad eines Fahrzeugs ermittelt.

In einem Bereitstellungsschritt 303 wird ein radindividuelles Antriebsmoment durch eine dem linken Rad zugeordnete Antriebseinheit und/oder durch eine dem rechten Rad zugeordnete Antriebseinheit derart bereitgestellt, dass die Raddrehzahldifferenz minimiert wird.

In einem Ansteuerungsschritt 305 werden jeweilig verbliebene Komponenten des Stabilisierungssystems derart angesteuert, dass ein zum Minimieren der Raddrehzahldifferenz benötigtes Antriebsmoment bereitgestellt wird, für den Fall, dass eine Komponente des Stabilisierungssystems, wie bspw. ein Einzelmotor einer Antriebseinheit und/oder ein Energiemodul des Energiespeichers und/oder eine Verbindung der Vielzahl Verbindungen fehlerhaft ist.

### Bezugszeichenliste

- 100: Stabilisierungssystem
- 101: erste Antriebseinheit
- 103: zweite Antriebseinheit
- 105: Energiespeicher
- 107: erstes Kontrollgerät
- 109: zweites Kontrollgerät
- 111: erster Batteriestrang
- 113: erste Batteriekontrolleinheit
- 115: zweiter Batteriestrang
- 117: zweite Batteriekontrolleinheit
- 119: erster Datenbus
- 121: zweiter Datenbus
- 123: erste Verbindungsleitungen
- 125: zweite Verbindungsleitungen
- A1L,... B4L: Einzelmotoren
- A1R,... B4R: Einzelmotoren
- A1', A2', A3', An', B1', B2', B3', Bn': Batteriezellen
- 200: Fahrzeug
- 201: erstes Rad
- 203: zweites Rad
- 300: Verfahren
- 301: Ermittlungsschritt
- 303: Bereitstellungsschritt
- 305: Ansteuerungsschritt

## Patentansprüche

1. Stabilisierungssystem (100) für ein Fahrzeug,
wobei das Stabilisierungssystem (100) folgende Komponenten umfasst:
- eine erste Antriebseinheit (101) und mindestens eine zweite Antriebseinheit (103),
- einen ersten Batteriestrang (111) und mindestens einen zweiten Batteriestrang (115),
- ein erstes Kontrollgerät (107) und mindestens ein zweites Kontrollgerät (109),
wobei die erste Antriebseinheit (101) eine Vielzahl Einzelmotoren (A1L, A2L, A3L, A4L, B1L, B2L, B3L, B4L) umfasst und die mindestens eine zweite Antriebseinheit (103) eine Vielzahl Einzelmotoren (A1R, A2R, A3R, A4R, B1R, B2R, B3R, B4R) umfasst,
wobei eine erste Gruppe Einzelmotoren (A1L, A2L, A3L, A4L und A1R, A2R, A3R, A4R) der ersten Antriebseinheit (101) und der mindestens einen zweiten Antriebseinheit (103) mit dem ersten Kontrollgerät (107) verbunden und durch den ersten Batteriestrang (111) mit elektrischer Energie zu versorgen ist,
wobei eine zweite Gruppe Einzelmotoren (B1L, B2L, B3L, B4L und B1R, B2R, B3R, B4R) der ersten Antriebseinheit (101) und der mindestens einen zweiten Antriebseinheit (103) mit dem zweiten Kontrollgerät (109) verbunden und durch den zweiten Batteriestrang (115) mit elektrischer Energie zu versorgen ist,
wobei das erste Kontrollgerät (107) und/oder das mindestens eine zweite Kontrollgerät (109) dazu konfiguriert sind, für den Fall, dass mindestens eine Komponente des Stabilisierungssystem (100) fehlerhaft ist, jeweilige verbliebene, nicht fehlerhafte Komponenten des Stabilisierungssystems (100) derart zu kontrollieren, dass eine Raddrehzahldifferenz von Raddrehzahlen jeweiliger durch die jeweiligen Antriebseinheiten (101, 103) anzutreibenden Räder (201, 203) mittels der verbliebenen Komponenten minimiert wird.

2. Stabilisierungssystem (100) nach Anspruch 1,
**dadurch gekennzeichnet, dass**
das erste Kontrollgerät (107) und/oder das mindestens eine zweite Kontrollgerät (109) dazu konfiguriert sind, für den Fall, dass mindestens eine Komponente der Komponenten des Stabilisierungssystem (100) fehlerhaft ist, die mindestens eine fehlerhafte Komponente zu deaktivieren und das Stabilisierungssystem (100) mit jeweiligen fehlerfreien Komponenten zu betreiben.

3. Stabilisierungssystem (100) nach einem der voranstehenden Ansprüche,
**dadurch gekennzeichnet, dass**
das erste Kontrollgerät (107) und das mindestens eine zweite Kontrollgerät (109) dazu konfiguriert sind, für den Fall eines fehlerhaften Einzelmotors (A1R,...,A4R, B1R,...,B4R, A1L,...A4L,B1L,..., B4L), eine Versorgung des fehlerhaften Einzelmotors (A1R,...,A4R, B1R,...,B4R, A1L,...A4L,B1L,..., B4L) mit elektrischer Energie zu stoppen oder eine von dem fehlerhaften Einzelmotor (A1R,...,A4R, B1R,... ,B4R, A1L,...A4L,B1L,..., B4L) angeforderte Antriebsleistung auszusetzen und verbleibende fehlerfreie Einzelmotoren (A1R,...,A4R, B1R,...,B4R, A1L,...A4L,B1L,..., B4L) der jeweiligen Antriebseinheit (101, 103) derart zu kontrollieren, dass diese jeweils ein gegenüber einem Betrieb mit sämtlichen fehlerfrei arbeitenden Einzelmotoren (A1R,...,A4R, B1R,...,B4R, A1L,...A4L,B1L,..., B4L) höheres Antriebsmoment bereitstellen, um den fehlerhaften Einzelmotor (A1R,...,A4R, B1R,...,B4R, A1L,...A4L,B1L,..., B4L) zu kompensieren.

4. Stabilisierungssystem (100) nach einem der voranstehenden Ansprüche,
**dadurch gekennzeichnet, dass**
die jeweiligen Einzelmotoren (A1R,...,A4R, B1R,...,B4R, A1L,...A4L,B1L,..., B4L) einer jeweiligen Antriebseinheit (101, 103) einem vorgegebenen Winkelbereich einer Antriebsbahn der jeweiligen Antriebseinheit (101, 103) zugeordnet sind und jeweilige Einzelmotoren (A1L, A2L, A3L, A4L; A1R, A2R, A3R, A4R) der erste Gruppe und jeweilige Einzelmotoren (A1L, A2L, A3L, A4L; A1R, A2R, A3R, A4R) der zweite Gruppe (B1L, B2L, B3L, B4L; B1R, B2R, B3R, B4R) abwechselnd in der entsprechenden Antriebseinheit (101, 103) angeordnet sind.

5. Stabilisierungssystem (100) nach einem der voranstehenden Ansprüche,
**dadurch gekennzeichnet, dass**
das Stabilisierungssystem (100) zwei Antriebseinheiten (101, 103) mit jeweils acht Einzelmotoren (A1L, A2L, A3L, A4L, B1L, B2L, B3L, B4L; A1R, A2R, A3R, A4R, B1R, B2R, B3R, B4R) umfasst,
und jeweilige Einzelmotoren (A1L, A2L, A3L, A4L, B1L, B2L, B3L, B4L; A1R, A2R, A3R, A4R, B1R, B2R, B3R, B4R) einem Winkelbereich von 45° einer Antriebsbahn von 360° einer jeweiligen Antriebseinheit (101, 103) zugeordnet sind.

6. Stabilisierungssystem (100) nach einem der voranstehenden Ansprüche,
**dadurch gekennzeichnet, dass**
die jeweiligen Antriebseinheiten (101, 103) der Vielzahl Antriebseinheiten (101, 103) ausgewählt sind aus der folgenden Liste an Antriebstypen: Radnabenmotor, Rad naher Motor und aufbaufester Motor mit Gelenkwelle.

7. Stabilisierungssystem (100) nach einem der voranstehenden Ansprüche,
**dadurch gekennzeichnet, dass**
das Stabilisierungssystem (100) dazu konfiguriert ist, ein Fahrzeug anzutreiben und dabei durch die Minimierung der Differenz der Raddrehzahlen der jeweiligen durch die jeweiligen Antriebseinheiten (101, 103) anzutreibenden Räder (201, 203) das Fahrzeug zu stabilisieren oder ein von einem Zugfahrzeug zu ziehendes Fahrzeug durch die Minimierung der Differenz der Raddrehzahlen der jeweiligen durch die jeweiligen Antriebseinheiten anzutreibenden Räder (201, 203) zu stabilisieren.

8. Stabilisierungssystem (100) nach einem der voranstehenden Ansprüche,
**dadurch gekennzeichnet, dass**
das Stabilisierungssystem (100) dazu konfiguriert ist, die Differenz der Raddrehzahlen der jeweiligen durch die jeweiligen Antriebseinheiten anzutreibenden Räder (201, 203) ausschließlich durch radselektives Bereitstellen von negativem Antriebsmoment zu minimieren.

9. Stabilisierungssystem (100) nach einem der voranstehenden Ansprüche,
**dadurch gekennzeichnet, dass**
die erste Gruppe Einzelmotoren 2n elektrische Einzelmotoren (A1L...AnL und
A1R...AnR) mit n ≥ 1 umfasst, und die zweite Gruppe Einzelmotoren 2n elektrische Einzelmotoren (B1L... BnL und B1R... BnR) mit n ≥ 1 umfasst, und
die erste elektrische Antriebseinheit (101) mindestens zwei Einzelmotoren (A1L und B1 L), bevorzugt 2n Einzelmotoren (A1L...AnL und B1L... BnL) umfasst, und
die mindestens eine zweite elektrische Antriebseinheit (103) mindestens zwei Einzelmotoren (A1R und B1R), bevorzugt 2n Einzelmotoren (A1R...AnR und B1R...BnR) umfasst.

10. Stabilisierungssystem (100) nach einem der voranstehenden Ansprüche,
**dadurch gekennzeichnet, dass**
das erste Kontrollgerät (107) und das mindestens eine zweite Kontrollgerät (109) als physisch getrennte Einheiten oder als Kontrollmodule eines übergeordneten Zentralkontrollgeräts ausgestaltet sind.

11. Fahrzeug (200) mit einem Stabilisierungssystem (100) nach einem der voranstehenden Ansprüche, wobei das Fahrzeug (200) ein Kraftwagen oder ein Anhänger ist, und wobei das Fahrzeug (200) mindestens eine Achse mit einem linken Rad (201) und einem rechten Rad (203) umfasst, und wobei eine erste Antriebseinheit (101) des Stabilisierungssystems (103) dem linken Rad (201) und eine zweite Antriebseinheit (103) des Stabilisierungssystems dem rechten Rad (203) zugeordnet ist.

12. Verfahren (300) zur Stabilisierung eines Fahrzeugs (200) nach Anspruch 11,
wobei das Verfahren (300) folgende Schritte aufweist:
- Ermitteln (301) einer Raddrehzahldifferenz zwischen dem linken Rad (201) und dem rechten Rad (203), durch mindestens ein Kontrollgerät (107, 109),
- Bereitstellen (303) eines radindividuellen Antriebsmoments durch die dem linken Rad (201) zugeordnete Antriebseinheit (101, 103) und/oder durch die dem rechten Rad (203) zugeordnete Antriebseinheit (101, 103) derart, dass die Raddrehzahldifferenz minimiert wird,
- für den Fall, dass eine Komponente des Stabilisierungssystems (100) fehlerhaft ist, Ansteuern (305) jeweilig verbliebener, nicht fehlerhafter Komponenten des Stabilisierungssystems (100) derart, dass ein zum Minimieren der Raddrehzahldifferenz benötigtes Antriebsmoment bereitgestellt wird, durch das mindestens eine Kontrollgerät (107, 109).

13. Verfahren (300) nach Anspruch 12,
**dadurch gekennzeichnet, dass**
die jeweilig verbliebenen Komponenten derart angesteuert werden, dass diese ein positives Antriebsmoment an einem langsamer drehenden Rad des Fahrzeugs (200) oder ein negatives Antriebsmoment an einem schneller drehenden Rad des Fahrzeugs (200) bereitstellen.
